(19) Europäisches Patentamt
European Patent Office
Office européen des brevets

(11) EP 3 410 152 A2

(12) DEMANDE DE BREVET EUROPEEN

(43) Date de publication:
05.12.2018 Bulletin 2018/49

(51) Int Cl.:
G01S 15/93 (2006.01)          G01S 7/527 (2006.01)
G01S 15/52 (2006.01)

(21) Numéro de dépôt: 18175302.1

(22) Date de dépôt: 31.05.2018

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 31.05.2017 FR 1754828

(71) Demandeur: Parrot Drones
75010 Paris (FR)

(72) Inventeurs:
• REMOND, Fabien
94240 L'HAY LES ROSES (FR)
• HOURIOUX, Jérôme
92800 PUTEAUX (FR)

(74) Mandataire: Lavoix
2, place d'Estienne d'Orves
75441 Paris Cedex 09 (FR)

(54) **DISPOSITIF ÉLECTRONIQUE DE DÉTERMINATION DE LA DISTANCE D'UN DRONE PAR RAPPORT À UN OBSTACLE AVEC FILTRAGE ADAPTÉ À LA VITESSE DU DRONE, DRONE, PROCÉDÉ DE DÉTERMINATION ET PROGRAMME D'ORDINATEUR**

(57) Ce dispositif électronique (12) de détermination d'une distance d'un drone (10) par rapport à un obstacle (14), comprend :
- un module d'émission (40) pour commander l'émission d'un signal ultrasonore en direction de l'obstacle ;
- un module de réception (42) pour recevoir un signal représentatif d'un signal ultrasonore réfléchi par l'obstacle ;
- un module de calcul (44) pour calculer la distance du drone par rapport à l'obstacle, à partir du signal reçu ;
- un module de filtrage (46) comportant au moins un filtre adapté à un décalage Doppler, chaque filtre adapté générant un signal filtré respectif en fonction d'un produit de convolution du signal ultrasonore émis, auquel le décalage Doppler respectif est appliqué, avec le signal ultrasonore reçu ;
le module de calcul (44) calculant alors la distance du drone par rapport à l'obstacle, à partir du ou des signaux filtrés issus du module de filtrage (46).

FIG.1

**Description**

La présente invention concerne un dispositif électronique de détermination d'une distance d'un drone par rapport à un obstacle. Le dispositif électronique de détermination comprend un module d'émission configuré pour commander l'émission d'un signal ultrasonore en direction de l'obstacle, un module de réception configuré pour recevoir un signal représentatif d'un signal ultrasonore réfléchi par l'obstacle, et un module de calcul configuré pour calculer une distance du drone par rapport à l'obstacle, à partir du signal reçu.

L'invention concerne également un drone comprenant un tel dispositif électronique de détermination.

L'invention concerne également un procédé de détermination d'une distance d'un drone par rapport à un obstacle, le procédé étant mis en oeuvre par un dispositif électronique.

L'invention concerne également un programme d'ordinateur comportant des instructions logicielles qui, lorsqu'elles sont exécutées par un ordinateur, mettent en oeuvre un tel procédé de détermination.

L'invention concerne le domaine des drones, c'est-à-dire des appareils motorisés volants pilotés à distance. L'invention s'applique notamment aussi bien aux drones à voilure fixe qu'aux drones à voilure tournante, tels que les quadricoptères.

On connait du document EP 2 400 460 A1 un drone comportant un dispositif électronique de détermination de la distance du type précité. Le drone est un drone à voilure tournante, pilotable à l'aide d'un dispositif électronique portable, tel qu'un ordiphone (de l'anglais *smartphone*) ou une tablette électronique.

Le drone est pourvu d'un altimètre à ultrasons, émettant en direction du sol un faisceau permettant de connaître à tout moment l'altitude du drone par rapport au sol. L'altimètre à ultrasons forme alors un dispositif électronique de détermination de la distance du drone par rapport au sol formant l'obstacle.

L'altimètre à ultrasons, également appelé télémètre à ultrasons, comprend généralement un transducteur électro-acoustique générant en direction du sol un faisceau d'ultrasons. La réflexion de ce faisceau sur le sol produit alors des échos acoustiques qui sont reçus par un transducteur, et une longueur du chemin acoustique parcouru est alors calculée en fonction du laps de temps séparant l'émission du faisceau de la réception du premier écho et de la vitesse du son, permettant d'estimer ainsi l'altitude du drone par rapport au sol.

Toutefois, la distance fournie par un tel dispositif électronique de détermination n'est pas toujours très fiable, et le pilotage du drone est alors parfois un peu brutal, notamment lors de la phase d'atterrissage.

Le but de l'invention est alors de proposer un dispositif électronique de détermination d'une distance d'un drone par rapport à un obstacle permettant de calculer de manière plus fiable et plus précise la distance du drone par rapport à l'obstacle, et permettant alors de réduire d'éventuels à-coups lors du pilotage du drone, notamment en phase d'atterrissage.

A cet effet, l'invention a pour objet un dispositif électronique de détermination de la distance du type précité, dans lequel le dispositif électronique de détermination comprend en outre un module de filtrage comportant au moins un filtre adapté à un décalage Doppler respectif, chaque filtre adapté étant configuré pour générer un signal filtré respectif en fonction d'un produit de convolution du signal ultrasonore émis, auquel le décalage Doppler respectif est appliqué, avec le signal ultrasonore reçu ; le module de calcul étant alors configuré pour calculer la distance du drone par rapport à l'obstacle, à partir du ou des signaux filtrés issus du module de filtrage.

Le module de filtrage comportant au moins un filtre adapté à un décalage Doppler respectif, chaque filtre adapté étant configuré pour générer un signal filtré respectif en fonction d'un produit de convolution du signal ultrasonore émis, auquel le décalage Doppler respectif est appliqué, avec le signal ultrasonore reçu, permet alors d'augmenter le rapport signal sur bruit du signal fourni au module de calcul.

Le module de calcul est alors capable de calculer la distance du drone par rapport à l'obstacle, à partir du ou des signaux filtrés issus du module de filtrage, de manière plus fiable et plus précise. Avec le dispositif électronique de détermination, la résolution est alors généralement inférieure à 10 cm.

Le dispositif électronique de détermination permet également d'avoir une meilleure portée, c'est-à-dire d'augmenter la valeur maximale de la distance du drone par rapport à l'obstacle qui est déterminée pour une résolution donnée, la distance déterminée pouvant par exemple aller jusqu'à 30 m pour une résolution de 10 cm.

Suivant d'autres aspects avantageux de l'invention, le dispositif électronique de détermination comprend une ou plusieurs des caractéristiques suivantes, prises isolément ou suivant toutes les combinaisons techniquement possibles :

- le module de filtrage comporte une pluralité de filtres adaptés chacun à un décalage Doppler respectif, agencés en parallèle, le module de calcul étant alors configuré pour calculer la distance du drone par rapport à l'obstacle, à partir des signaux filtrés issus du module de filtrage ;
- le dispositif comprend en outre un module de sélection configuré pour sélectionner, en fonction d'une vitesse du drone en direction de l'obstacle, un filtre adapté parmi la pluralité de filtres adaptés, le module de calcul étant alors configuré pour calculer la distance du drone par rapport à l'obstacle, à partir du signal filtré issu du filtre adapté sélectionné ;
- le module d'émission est configuré pour commander l'émission du signal ultrasonore sous forme d'au moins une impulsion modulée en fréquence,
chaque impulsion modulée en fréquence ayant une durée temporelle de préférence supérieure ou égale à 2 ms, de préférence encore supérieure ou égale à 4 ms, et de préférence encore supérieure ou égale à 6 ms ;
- le module d'émission est configuré en outre pour commander l'émission du signal ultrasonore sous forme d'au moins une impulsion non modulée en fréquence, et le dispositif comprend en outre un module de commutation configuré pour commuter le module d'émission entre un premier mode d'émission du signal ultrasonore sous forme d'au moins une impulsion modulée en fréquence et un deuxième mode d'émission du signal ultrasonore sous forme d'au moins une impulsion non modulée en fréquence,
chaque impulsion non modulée en fréquence ayant une durée temporelle de préférence inférieure ou égale à

$\dfrac{2 \times R}{c}$ où R est une résolution prédéfinie en distance et c représente la vitesse du son dans l'air, telle qu'une durée inférieure ou égale à 1ms ;
- le module de commutation est configuré pour commuter le module d'émission entre le premier mode d'émission et le deuxième mode d'émission, en fonction d'au moins une grandeur parmi une distance entre le drone et un obstacle et un rapport signal sur bruit associé à la ou aux dernières réceptions de signal ultrasonore,
le nombre d'émissions suivant un mode d'émission donné parmi le premier mode d'émission et le deuxième mode d'émission étant de préférence supérieur ou égal à un nombre minimal prédéterminé, le nombre minimal prédéterminé étant de préférence supérieur ou égal à 3, de préférence encore égal à 4 ; et
- le module de réception comporte plusieurs chaînes de réception agencées en parallèle, chaque chaine de réception étant configurée pour enregistrer le signal reçu avec une valeur de gain respective,
chaque valeur de gain étant de préférence distincte d'une chaine de réception à l'autre.

L'invention a également pour objet un drone comprenant un dispositif électronique de détermination configuré pour déterminer la distance du drone par rapport à un obstacle, dans lequel le dispositif électronique de détermination est tel que défini ci-dessus.

L'invention a également pour objet un procédé de détermination d'une distance d'un drone par rapport à un obstacle, le procédé étant mis en oeuvre par un dispositif électronique et comprenant :

- la commande de l'émission d'un signal ultrasonore en direction de l'obstacle ;
- la réception d'un signal représentatif d'un signal ultrasonore réfléchi par l'obstacle ;
- le filtrage du signal reçu avec au moins un filtre adapté à un décalage Doppler respectif, chaque filtre adapté générant un signal filtré respectif en fonction d'un produit de convolution du signal ultrasonore émis, auquel le décalage Doppler respectif est appliqué ;
- le calcul de la distance du drone par rapport à l'obstacle, à partir du ou des signaux filtrés.

L'invention a également pour objet un programme d'ordinateur comportant des instructions logicielles qui, lorsqu'elles sont exécutées par un ordinateur, mettent en oeuvre un procédé de détermination tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un drone, selon l'invention, comportant un dispositif électronique de détermination d'une distance du drone par rapport à un obstacle ;
- la figure 2 est une représentation schématique partielle du dispositif électronique de détermination de la figure 1 ; et
- la figure 3 est un organigramme d'un procédé, selon l'invention, de détermination de la distance du drone par rapport à l'obstacle.

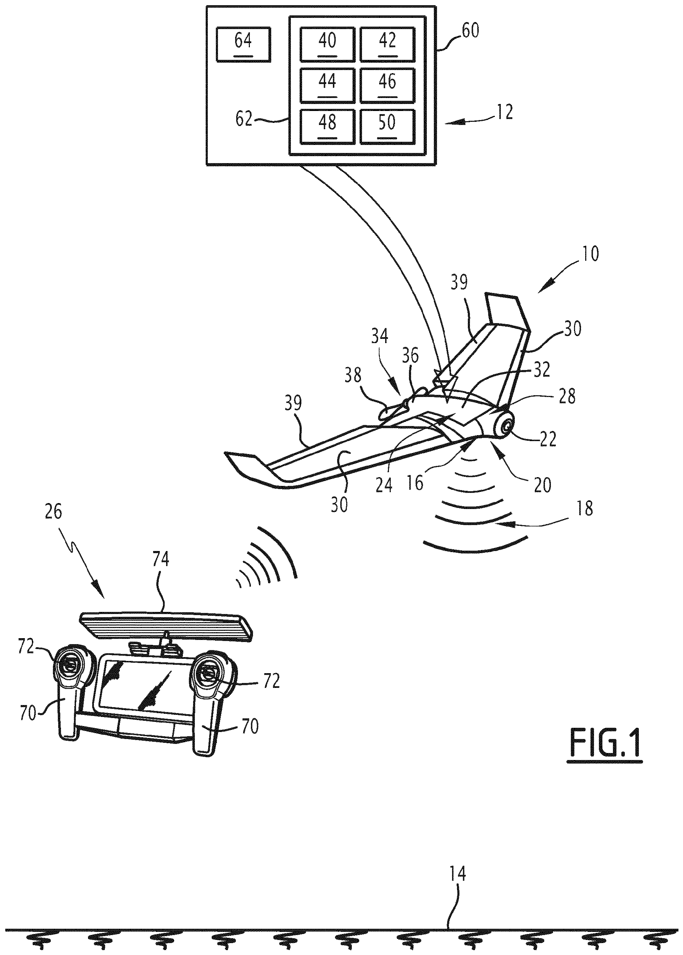

Sur la figure 1, un drone 10, c'est-à-dire un aéronef sans pilote à bord, comprend un dispositif électronique 12 de détermination d'une distance D du drone 10 par rapport à un obstacle 14.

Le drone 10 comprend au moins un émetteur-récepteur ultrason 16 configuré pour émettre des signaux ultrasonores 18, notamment pour émettre un signal ultrasonore 18 en direction de l'obstacle 14, et pour recevoir des signaux ultrasonores réfléchis parmi les signaux émis, notamment pour recevoir un signal ultrasonore réfléchi par l'obstacle 14.

Dans l'exemple de la figure 1, l'obstacle 14 est un terrain survolé par le drone 10, et l'émetteur-récepteur ultrason 16 est alors dirigé vers le bas, afin d'être orienté vers le sol lorsque le drone 10 est en vol. En variante ou en complément, l'obstacle 14 est un obstacle se trouvant dans la direction de déplacement du drone, et l'émetteur-récepteur ultrason 16 est alors dirigé vers l'avant, afin de pointer en direction de l'obstacle 14 lorsque le drone 10 est en vol.

Le drone 10 comprend de préférence deux émetteurs-récepteurs ultrason 16 configurés chacun pour émettre des signaux ultrasonores 18, à savoir un premier émetteur-récepteur ultrason dirigé vers le bas et un deuxième émetteur-récepteur ultrason dirigé vers l'avant.

En variante, le drone 10 comprend un unique émetteur-récepteur ultrason 16 orientable, apte notamment à être orienté alternativement vers le bas ou vers l'avant, suivant la phase de vol concernée du drone 10.

Le drone 10 comprend un premier capteur d'images 20 configuré pour prendre une succession d'images du terrain survolé par le drone 10. En complément facultatif, le drone 10 comprend un deuxième capteur d'images 22 configuré pour prendre des images d'une scène vers laquelle se dirige le drone 10.

Le drone 10 comprend également un dispositif de mesure 24 apte à mesurer une vitesse du drone 10. Le dispositif de mesure 24 est, par exemple, un dispositif de positionnement par satellite, également appelé dispositif GNSS (de l'anglais *Global Navigation Satellite System*), ou encore une centrale inertielle, également appelée IMU (de l'anglais *Inertial Measurement Unit*) comportant des accéléromètres et/ou des gyromètres, permettant de mesurer des vitesses angulaires et des angles d'attitude du drone10.

En complément facultatif, le drone 10 comprend un capteur de pression, non représenté, aussi appelé capteur barométrique, configuré pour déterminer des variations d'altitude du drone 10, telles que des variations instantanées et/ou des variations par rapport à un niveau de référence, c'est-à-dire par rapport à une altitude initiale prédéfinie. Le niveau de référence est, par exemple le niveau de la mer, et le capteur de pression est alors apte à fournir une altitude mesurée du drone 10 par rapport au niveau de la mer.

En complément facultatif, le drone 10 comprend un capteur, non représenté, de mesure de la vitesse air du drone, ce capteur de mesure étant relié à une prise de pression dynamique d'un élément de type sonde de Pitot.

Le drone 10 est un engin volant motorisé pilotable à distance, notamment via une manette 26.

Le drone 10 comporte un module de transmission 28 configuré pour échanger des données, de préférence par ondes radioélectriques, avec un ou plusieurs équipements électroniques, notamment avec la manette 26, voire avec d'autres éléments électroniques pour la transmission de la ou des images acquises par les capteurs d'image 20, 22.

Dans l'exemple de la figure 1, le drone 10 est un drone à voilure fixe, de type aile volante. Il comprend deux ailes 30 et un fuselage 32 muni en partie arrière d'un système de propulsion 34 comportant un moteur 36 et une hélice 38. Chaque aile 30 est munie du côté du bord de fuite d'au moins une gouverne 39 orientable via un servomécanisme, non représenté, pour piloter la trajectoire du drone 10.

En variante, non représentée, le drone 10 est un drone à voilure tournante, comportant au moins un rotor, et de préférence une pluralité de rotors, le drone 10 étant alors appelé drone multirotor. Le nombre de rotors est par exemple égal à 4, et le drone 10 est alors un drone quadrirotor.

Le dispositif électronique de détermination 12 est configuré pour déterminer la distance D du drone 10 par rapport à l'obstacle 14, c'est-à-dire pour estimer une valeur de cette distance D.

Le dispositif électronique de détermination 12 comprend un module d'émission 40 configuré pour commander l'émission d'un signal ultrasonore 18 en direction de l'obstacle 14, un module de réception 42 configuré pour recevoir un signal représentatif d'un signal ultrasonore réfléchi par l'obstacle 14 et un module de calcul 44 configuré pour calculer la distance D du drone 10 par rapport à l'obstacle 14, à partir du signal reçu.

Le dispositif électronique de détermination 12 comprend en outre, selon l'invention, un module de filtrage 46 comportant au moins un filtre $FD_1$, $FD_2$, ..., $FD_N$ adapté à un décalage Doppler respectif. Le module de calcul 44 est alors configuré pour calculer la distance D à partir du ou des signaux filtrés issus du module de filtrage 46.

En complément facultatif, lorsque le module de filtrage 46 comprend une pluralité de filtres $FD_1$, $FD_2$, ..., $FD_N$ adaptés chacun à un décalage Doppler respectif et agencés en parallèle, le dispositif électronique de détermination 12 comprend de préférence en outre un module de sélection 48 configuré pour sélectionner, en fonction d'une vitesse V du drone 10 en direction de l'obstacle 14, un filtre adapté parmi la pluralité de filtres adaptés $FD_1$, $FD_2$, ..., $FD_N$. Le module de calcul 44 est alors configuré pour calculer la distance D à partir du signal filtré issu du filtre adapté sélectionné.

Lorsque la vitesse V n'est pas connue, l'ensemble des filtres adaptés $FD_1$, $FD_2$, ..., $FD_N$ est calculé et un filtre adapté $FD_i$ est sélectionné sans cette information a priori de vitesse. La distance D ainsi estimée par le dispositif électronique de détermination 12 est alors moins précise. Dans ce cas, toutefois, le dispositif de détermination 12 est configuré en outre pour estimer la vitesse du drone 10 par rapport à l'obstacle 14, cette vitesse étant déterminée grâce au numéro de filtre sélectionné.

Lorsque la vitesse V n'est pas connue, le module de calcul 44 est configuré pour sélectionner le filtre adapté $FD_i$ parmi tous les filtres adaptés $FD_1$, $FD_2$, ..., $FD_N$ en fonction d'estimateurs de probabilités. Ces probabilités dépendent par exemple du rapport signal à bruit en sortie chaque filtre adapté $FD_1$, $FD_2$, ..., $FD_N$.

En complément facultatif, lorsque le module d'émission 40 est apte à commander soit l'émission du signal ultrasonore sous forme d'au moins une impulsion modulée en fréquence, soit l'émission du signal ultrasonore sous forme d'au moins une impulsion non modulée en fréquence, le dispositif électronique de détermination 12 comprend de préférence en outre un module de commutation 50 configuré pour commuter le module d'émission 40 entre un premier mode M1 d'émission du signal ultrasonore sous forme d'au moins une impulsion modulée en fréquence et un deuxième mode M2 d'émission du signal ultrasonore sous forme d'au moins une impulsion non modulée en fréquence.

Dans l'exemple de la figure 1, le dispositif électronique de détermination 12 comprend une unité de traitement d'informations 60, formée par exemple d'une mémoire 62 et d'un processeur 64 associé à la mémoire 62.

Lorsque l'obstacle 14 considéré est un terrain, le terrain s'entend au sens général du terme, comme une portion de la surface de la Terre lorsqu'il s'agit un terrain extérieur, qu'il s'agisse d'une surface terrestre, ou d'une surface maritime, ou encore d'une surface comportant à la fois une portion terrestre et une portion maritime. En variante, le terrain est un terrain intérieur disposé à l'intérieur d'un bâtiment. Le terrain est également appelé sol.

Chaque émetteur-récepteur ultrason 16 comporte un transducteur électro-acoustique ou un transducteur ultrasonore apte à générer chaque signal ultrasonore 18. L'émetteur-récepteur comporte un transducteur d'émission et un autre transducteur de réception. En variante, l'émetteur-récepteur comporte un unique transducteur configuré à la fois pour émettre et recevoir des signaux ultrasonores.

Le premier capteur d'images 20 est connu en soi, et est par exemple une caméra à visée verticale pointant vers le bas. Le deuxième capteur d'images 22 est par exemple une caméra à visée frontale.

La manette 26 est connue en soi, et permet de piloter le drone 10. Dans l'exemple de la figure 1, la manette 26 comprend deux poignées de préhension 70, chacune étant destinée à être saisie par une main respective du pilote, une pluralité d'organes de commande, dont deux manches à balai 72 (de l'anglais *joystick*), chacun étant disposé à proximité d'une poignée de préhension 70 respective et étant destiné à être actionné par le pilote, de préférence par un pouce respectif. En variante, non représentée, la manette 26 est mise en oeuvre via un ordiphone ou une tablette électronique, comme connu en soi.

La manette 26 comprend également une antenne radioélectrique 74 et un émetteur-récepteur radioélectrique, non représenté, pour l'échange de données par ondes radioélectriques avec le drone 10, à la fois en liaison montante et en liaison descendante.

Dans l'exemple de la figure 1, le module d'émission 40, le module de réception 42, le module de calcul 44 et le module de filtrage 46, ainsi qu'en complément facultatif le module de sélection 48 et le module de commutation 50, sont réalisés chacun sous forme d'un logiciel exécutable par le processeur 64. La mémoire 62 de l'unité de traitement d'informations 60 est alors apte à stocker un logiciel d'émission configuré pour commander l'émission d'un signal ultrasonore en direction de l'obstacle 14, un logiciel de réception configuré pour recevoir un signal représentatif d'un signal ultrasonore réfléchi par l'obstacle 14, un logiciel de calcul configuré pour calculer la distance D du drone 10 par rapport à l'obstacle 14 et un logiciel de filtrage configuré pour filtrer le signal reçu, avec au moins un filtre $FD_1$, $FD_2$, ..., $FD_N$ adapté à un décalage Doppler respectif, le logiciel de calcul étant alors configuré pour calculer la distance D à partir du ou des signaux filtrés issus du logiciel de filtrage. En complément facultatif, la mémoire 62 de l'unité de traitement d'informations 60 est également apte à stocker un logiciel de sélection configuré pour sélectionner, en fonction de la vitesse V du drone 10 en direction de l'obstacle 14, un filtre adapté parmi la pluralité de filtres adaptés $FD_1$, $FD_2$, ..., $FD_N$, le logiciel de calcul étant alors configuré pour calculer la distance D à partir du signal filtré issu du filtre adapté sélectionné. En complément facultatif, la mémoire 62 de l'unité de traitement d'informations 60 est également apte à stocker un logiciel de commutation configuré pour commuter le logiciel d'émission entre le premier mode M1 d'émission du signal sonore sous forme d'au moins une impulsion modulée en fréquence et le deuxième mode M2 d'émission du signal ultrasonore sous forme d'au moins une impulsion non modulée en fréquence. Le processeur 64 de l'unité de traitement d'informations 60 est alors apte à exécuter le logiciel d'émission, le logiciel de réception, le logiciel de calcul et le logiciel de filtrage, ainsi qu'en complément facultatif le logiciel de sélection et le logiciel de commutation.

En variante non représentée, le module d'émission 40, le module de réception 42, le module de calcul 44 et le module de filtrage 46, ainsi qu'en complément facultatif le module de sélection 48 et le module de commutation 50, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

Lorsque le dispositif de détermination 12 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium apte à mémoriser des instructions électroniques et capable d'être couplé à un bus d'un système informatique. A titre d'exemple, le support lisible est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Le module d'émission 40 est relié au ou à chaque émetteur-récepteur ultrason 16, et est configuré pour envoyer une instruction de commande à l'émetteur-récepteur ultrason 16 correspondant, afin de commander l'émission d'un signal ultrasonore 18 en direction de l'obstacle 14.

Suivant le premier mode d'émission M1, le module d'émission 40 est configuré pour commander l'émission du signal ultrasonore 18 sous forme d'au moins une impulsion modulée en fréquence. Suivant le premier mode d'émission M1, chaque impulsion modulée en fréquence est de préférence une impulsion longue. Par impulsion longue, on entend typiquement une impulsion de quelques ms. Chaque impulsion modulée en fréquence a par exemple une durée temporelle Tp1 supérieure à 1 ms, de préférence supérieure ou égale à 2 ms, de préférence encore supérieure ou égale à 4 ms, et de préférence encore supérieure ou égale à 6 ms. Le premier mode d'émission M1 correspond alors à une compression d'impulsion. La largeur de bande de la modulation β est de préférence choisie aussi grande que le permet le transducteur d'émission. Les transducteurs d'émission sont limités en bande passante à quelques kHz, typiquement 2kHz pour des émetteurs à 40kHz. La résolution obtenue est environ égale à $\dfrac{c}{2 \times \beta}$ si le produit β*τ est suffisamment grand, typiquement supérieur à 20, τ étant la durée d'émission. Le premier mode d'émission M1 est aussi appelé mode d'émission à longue portée.

Suivant le deuxième mode d'émission M2, le module d'émission 40 est configuré pour commander l'émission du signal ultrasonore 18 sous forme d'au moins une impulsion non modulée en fréquence. Suivant le deuxième mode d'émission M2, chaque impulsion non modulée en fréquence est de préférence une impulsion courte, et a par exemple une durée temporelle Tp2 inférieure ou égale à $\dfrac{2 \times R}{c}$ où R est une résolution prédéfinie en distance et c représente la vitesse du son dans l'air, telle qu'une durée inférieure ou égale à 1ms. Le deuxième mode d'émission M2 est aussi appelé mode d'émission à courte portée.

Le module de réception 42 est relié au ou à chaque émetteur-récepteur ultrason 16, et est configuré pour recevoir, de l'émetteur-récepteur ultrason 16 correspondant, un signal représentatif d'un signal ultrasonore réfléchi par l'obstacle 14, le signal ultrasonore réfléchi par l'obstacle 14 étant reçu par ledit émetteur-récepteur ultrason 16.

Le signal représentatif est par exemple un signal numérique, le signal ultrasonore réfléchi par l'obstacle 14 et reçu par l'émetteur-récepteur ultrason 16 étant alors d'abord converti en un signal électrique analogique par le transducteur correspondant, et le signal électrique analogique étant ensuite converti en le signal numérique par un convertisseur analogique-numérique.

En complément facultatif, le module de réception 42 comporte plusieurs chaînes de réception, non représentées, les chaînes de réception étant agencées en parallèle. Chaque chaine de réception est configurée pour enregistrer le signal reçu avec une valeur de gain respective, chaque valeur de gain étant de préférence distincte d'une chaine de réception à l'autre.

Le module de calcul 44 est configuré pour calculer la distance D du drone 10 par rapport à l'obstacle 14 à partir du signal reçu. Le principe de calcul de la distance D est connu en soi, et repose sur le fait que le module de calcul 44 connait à la fois la vitesse de propagation du signal ultrasonore dans l'air et la durée temporelle qui s'est écoulée entre l'émission et la réception du signal ultrasonore, et est alors capable d'en déduire la distance D, celle-ci correspondant à la moitié de la distance parcourue par le signal ultrasonore pour effectuer l'aller et le retour entre le drone 10 et l'obstacle 14.

Selon l'invention, le module de calcul 44 est configuré pour calculer la distance D à partir du ou des signaux filtrés issus du module de filtrage 46. Le calcul de la distance D est alors effectué de manière plus fiable et plus précise, car le filtrage adapté permet d'augmenter le rapport signal à bruit du signal reçu en entrée du module de calcul 44.

Le module de filtrage 46 comporte au moins un filtre $FD_1$, $FD_2$, ..., $FD_N$ adapté à un décalage Doppler respectif.

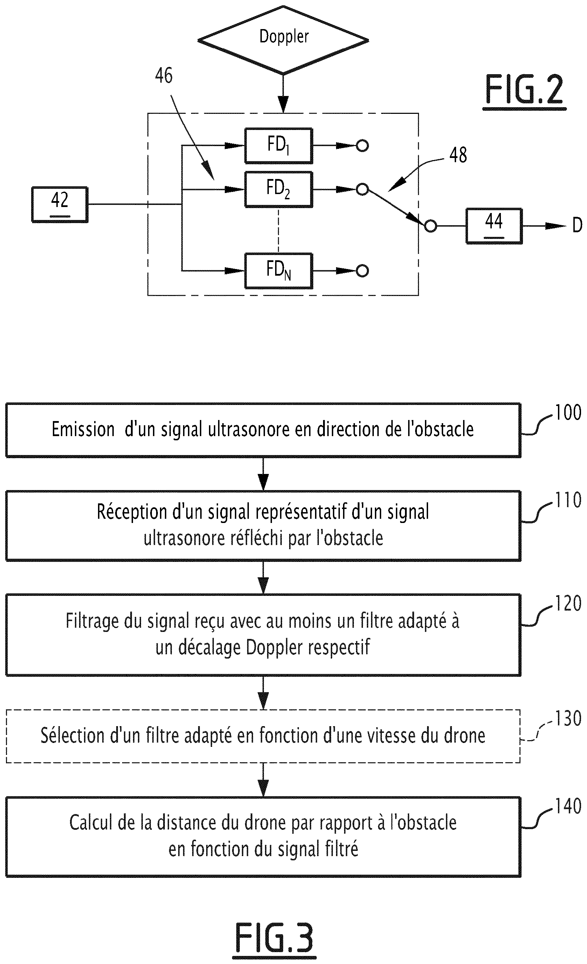

Le module de filtrage 46 comporte de préférence une pluralité de filtres $FD_1$, $FD_2$, ..., $FD_N$ adaptés chacun à un décalage Doppler respectif, les filtres adaptés $FD_1$, $FD_2$, ..., $FD_N$ étant alors agencés en parallèle, comme représenté sur la figure 2. Le nombre N de filtres adaptés $FD_1$, $FD_2$, ..., $FD_N$ est par exemple compris entre 1 et 25. L'espacement entre deux filtres adaptés $FD_j$, $FD_{j+1}$ successifs dépendra de la durée d'émission : plus celle-ci sera grande, plus les filtres adaptés $FD_j$, $FD_{j+1}$ devront être proches en fréquence Doppler. Ainsi, plus la durée d'émission est élevée, plus le nombre N de filtres adaptés $FD_1$, $FD_2$, ..., $FD_N$ sera grand. Autrement dit, le nombre N de filtres adaptés $FD_1$, $FD_2$, ..., $FD_N$ est de préférence une fonction croissante de la durée d'émission des impulsions. La valeur maximale de Doppler à représenter par les filtres extrêmes $FD_1$, $FD_N$ dépendra de la vitesse relative maximum atteignable par le drone 10 par rapport à l'obstacle 14, valeur typiquement supérieur à 10m/s.

Chaque filtre adapté $FD_1$, $FD_2$, ..., $FD_N$ est configuré pour générer un signal filtré respectif en fonction d'un produit de convolution du signal ultrasonore émis, auquel le décalage Doppler respectif est appliqué, avec le signal ultrasonore reçu. Chaque filtre $FD_i$ est alors adapté à un Doppler particulier.

Chaque filtre adapté $FD_1$, où i est un indice compris entre 1 et N, vérifie une équation du type :

$$z_i(\tau) = \int_{-\infty}^{+\infty} y(t) \cdot s^*_{Doppler_i}(t-\tau) \cdot dt \qquad\qquad (1)$$

où $z_i(\tau)$ représente le signal en sortie du filtre adapté d'indice i,

$S_{Doppler\_i}(t-\tau)$ représente le signal émis auquel a été appliqué un Doppler respectif d'indice i,

$y(t)$ représente le signal reçu en entrée du filtre adapté d'indice i, et s'écrit sous la forme :

$$y(t) = A \cdot s(t) + n(t) \qquad\qquad (2)$$

avec A un coefficient d'atténuation, $n(t)$ représentant du bruit et $s(t)$ représente le signal émis.

Lorsque le module de filtrage 46 comporte une pluralité de filtres adaptés $FD_1$, $FD_2$, ..., $FD_N$, le module de calcul 44 est configuré pour calculer la distance D à partir des différents signaux filtrés issus du module de filtrage 46. Le module de calcul 44 est alors configuré pour déterminer l'écho le plus pertinent parmi les différents signaux issus du module de filtrage 46, et en déduire la distance D à partir du délai de cet écho le plus pertinent, c'est-à-dire de la durée temporelle qui s'est écoulée entre l'émission et la réception de cet écho le plus pertinent.

Lorsque la vitesse relative du drone 10 par rapport à l'obstacle 14 est connue, le module de calcul 44 détermine l'écho le plus pertinent sur la sortie du filtre correspondant au Doppler associé à la vitesse donnée a priori. Le module de calcul 44 est également configuré pour déterminer l'écho le plus pertinent sur les filtres adjacents en fonction de la précision de la vitesse donnée.

Lorsque la vitesse n'est pas connue, le module de calcul 44 est configuré pour déterminer l'écho le plus pertinent parmi les N filtres adaptés $FD_1$, $FD_2$, ..., $FD_N$. La détermination, par le module de calcul 44, de l'écho le plus pertinent est effectuée à partir de différents estimateurs de probabilités. Ces probabilités dépendent par exemple du rapport signal à bruit en sortie chaque filtre adapté $FD_1$, $FD_2$, ..., $FD_N$.

En cas de sélection d'un filtre adapté parmi la pluralité de filtres adaptés $FD_1$, $FD_2$, ..., $FD_N$, le module de calcul 44 est en outre configuré pour calculer la distance D à partir du signal filtré issu du filtre adapté sélectionné. Le cas échéant, l'écho considéré comme le plus pertinent est celui fourni par le filtre adapté sélectionné, et le module de calcul 44 est alors, de manière analogue, configuré pour calculer la distance D à partir du délai de cet écho le plus pertinent.

Lorsque le module de filtrage 46 comporte une pluralité de filtres adaptés $FD_1$, $FD_2$, ..., $FD_N$, le module de sélection 48 est configuré pour sélectionner un filtre adapté $FD_i$ parmi cette pluralité de filtres adaptés $FD_1$, $FD_2$, ..., $FD_N$, en fonction de la vitesse V du drone 10 en direction de l'obstacle 14.

Le module de sélection 48 est par exemple configuré pour estimer une valeur du Doppler à partir de la vitesse V du drone 10 en direction de l'obstacle 14, puis pour sélectionner le filtre adapté $FD_i$ correspondant au Doppler ayant la valeur la plus proche de celle estimée. La vitesse V du drone 10 est la vitesse dans la direction de l'obstacle 14, c'est-à-dire la vitesse suivant la direction passant par le drone 10 et l'obstacle 14, correspondant par exemple à la droite passant par un centre du drone 10, tel que son centre de gravité, et un centre de l'obstacle 14.

L'homme du métier comprendra par exemple que, lorsque l'émetteur-récepteur ultrason 16 pointe vers l'avant, la vitesse V du drone 10 en direction de l'obstacle 14 est alors une vitesse horizontale. La vitesse horizontale est par exemple fournie par le dispositif de mesure 24, ou en variante calculée via un algorithme à flot optique. Cette vitesse est optionnellement issue de la fusion de ces derniers.

L'algorithme à flot optique est connu en soi, et est généralement utilisé pour estimer une vitesse sol, également appelée vitesse horizontale, à partir d'une altitude prédéfinie du drone par rapport au terrain, cette altitude prédéfinie étant supposée sensiblement constante. L'altitude prédéfinie est par exemple fournie par le capteur de pression. En prenant en compte l'inclinaison du drone, une vitesse en trois dimensions est en outre estimée, ladite vitesse incluant alors une vitesse verticale.

L'algorithme à flot optique permet d'estimer un mouvement différentiel d'une scène d'une image à l'image suivante, et il existe différentes méthodes connues de mise en oeuvre de l'algorithme à flot optique, telles que par exemple la méthode de Lucas-Kanade, la méthode de Horn-Schunk, ou encore la méthode de Farneback. L'algorithme à flot optique est en outre susceptible d'être mis en oeuvre dans une technique dite de multi-résolution, adaptée pour estimer le flot optique avec différentes résolutions d'image successives, en partant d'une faible résolution jusqu'à une résolution élevée.

L'algorithme à flot optique est également susceptible d'être combiné avec un autre algorithme de traitement d'images, en particulier avec un algorithme de type détecteur de coins, afin d'améliorer l'estimation du mouvement différentiel de la scène d'une image à la suivante, comme décrit dans le document EP 2 400 460 A1. D'autres exemples de mise en oeuvre d'un algorithme à flot optique sont également décrits dans les documents « Optic-Flow Based Control of a 46g Quadrotor » de Briod et al, « Optical Flow Based Velocity Estimation for Vision based Navigation of Aircraft » de Julin et al, et « Distance and velocity estimation using optical flow from a monocular camera » de Ho et al.

Lorsque le dispositif électronique de détermination 12 cherche à déterminer en particulier l'altitude du drone 10 par rapport au terrain, ou sol, c'est-à-dire la distance D par rapport à l'obstacle 14 qui est alors formé par le sol, alors l'émetteur-récepteur ultrason 16 pointe vers bas, c'est-à-dire vers le terrain, ou vers le sol, et la direction considérée vers l'obstacle 14 est la direction verticale. La vitesse V du drone 10 en direction de l'obstacle 14 est alors une vitesse verticale, telle que la vitesse verticale dans le repère NED, par exemple fournie par le dispositif de mesure 24 ou encore obtenue via le capteur de vitesse.

Le module de commutation 50 est configuré pour commuter le module d'émission 40 entre le premier mode d'émission M1 et le deuxième mode d'émission M2, en fonction d'au moins une grandeur parmi une distance entre le drone 10 et l'obstacle 14, telle qu'une une valeur précédemment calculée de la distance D, et un rapport signal sur bruit associé à la ou aux dernières réceptions de signal ultrasonore.

Le module de commutation 50 est par exemple configuré pour commuter en fonction seulement du rapport signal sur bruit associé à la ou aux dernières réceptions de signal ultrasonore, ce rapport signal sur bruit étant de préférence lissé sur les dernières réceptions. Cette commutation à partir du seul rapport signal sur bruit est par exemple effectuée en fonction d'une comparaison avec des seuils prédéfinis, ces seuils ayant de préférence des valeurs distinctes, afin d'avoir une hystérésis. A titre d'exemple, la commutation du deuxième mode d'émission M2 vers le premier mode d'émission M1 est effectuée lorsque ledit rapport signal sur bruit est inférieur à 25 dB, et la commutation suivante du premier mode d'émission M1 à nouveau vers le deuxième mode d'émission M2 est effectuée lorsque le rapport signal sur bruit est supérieur à 40 dB.

En variante, le module de commutation 50 est configuré pour commuter en fonction seulement de la ou des dernières valeurs calculées de la distance D, la valeur de la distance D prise en compte étant de préférence lissée sur les dernières valeurs calculées de la distance D. De manière analogue, cette commutation à partir de la seule distance est par exemple effectuée en fonction d'une comparaison avec des seuils prédéfinis, ces seuils ayant de préférence des valeurs distinctes, afin d'avoir une hystérésis. A titre d'exemple, la commutation du deuxième mode d'émission M2 vers le premier mode d'émission M1 est effectuée lorsque ladite distance est supérieure à 6 m, et la commutation suivante du premier mode d'émission M1 à nouveau vers le deuxième mode d'émission M2 est effectuée lorsque ladite distance est inférieure à 5,5 m.

Le module de commutation 50 est par exemple configuré pour commuter en fonction à la fois du rapport signal sur bruit associé à la ou aux dernières réceptions de signal ultrasonore et de la ou des dernières valeurs calculées de la distance D, ce rapport signal sur bruit étant de préférence lissé sur les dernières réceptions et la valeur de la distance D prise en compte étant également de préférence lissée sur les dernières valeurs calculées de la distance D. De manière analogue, cette commutation à partir à la fois du rapport signal sur bruit et de la seule distance est par exemple effectuée en fonction d'une comparaison avec des seuils prédéfinis, ces seuils ayant de préférence des valeurs distinctes, afin d'avoir une hystérésis. A titre d'exemple, la commutation du deuxième mode d'émission M2 vers le premier mode d'émission M1 est effectuée lorsque ledit rapport signal sur bruit est inférieur à 25 dB ou bien lorsque ladite distance est supérieure à 6 m. La commutation suivante du premier mode d'émission M1 à nouveau vers le deuxième mode d'émission M2 est ensuite effectuée lorsque le rapport signal sur bruit est supérieur à 40 dB et ladite distance est inférieure à 5,5 m.

En complément facultatif, le module de commutation 50 est en outre configuré pour vérifier que le nombre d'émissions, suivant le mode d'émission courant parmi le premier mode d'émission M1 et le deuxième mode d'émission M2, est supérieur ou égal à un nombre minimal prédéterminé, avant de commuter vers l'autre mode d'émission. Le nombre minimal prédéterminé d'émissions suivant le mode d'émission courant est de préférence supérieur ou égal à 3, de préférence encore égal à 4. Ce nombre minimal permet d'éviter des commutations trop fréquentes d'un mode d'émission à l'autre.

Le fonctionnement du drone 10, et en particulier du dispositif électronique de détermination 12, selon l'invention va désormais être expliqué à l'aide de la figure 3 représentant un organigramme du procédé de détermination selon l'invention.

Lors d'une étape initiale 100, l'émission d'un signal ultrasonore via l'émetteur-récepteur 16 correspondant en direction de l'obstacle 14 est commandée par le module d'émission 40.

Le module d'émission 40 commande alors cette émission du signal ultrasonore sous forme d'une impulsion modulée en fréquence suivant le premier mode d'émission M1, ou bien sous forme d'une impulsion non modulée en fréquence suivant le deuxième mode d'émission M2.

En complément facultatif, étant donné notamment que l'émission du signal ultrasonore sous forme d'une impulsion modulée en fréquence suivant le premier mode d'émission M1 n'est pas très efficace à courte portée, le premier mode d'émission M1 étant d'ailleurs également appelé mode d'émission longue portée, tandis que le deuxième mode d'émission M2 est appelé mode d'émission courte portée, le module de commutation 50 commute en outre, lors de cette étape initiale 100, le module d'émission 40 entre le premier mode d'émission M1 et le deuxième mode d'émission M2, en fonction d'au moins une grandeur parmi une distance entre le drone 10 et l'obstacle 14, telle que la ou les dernières valeurs calculées de la distance D, et un rapport signal sur bruit associé à la ou aux dernières réceptions de signal ultrasonore.

Comme décrit précédemment, le choix du mode d'émission parmi le premier mode d'émission M1 et le deuxième mode d'émission M2 est par exemple basé sur le seul rapport signal sur bruit, ou sur la seule distance, ou encore à la fois sur le rapport signal sur bruit et sur la distance. Ce choix du mode d'émission à partir du seul rapport signal sur bruit, ou à partir de la seule distance, ou encore à partir à la fois du rapport signal sur bruit et de la distance, est par exemple effectué en fonction d'une comparaison avec des seuils prédéfinis, ces seuils ayant de préférence des valeurs distinctes entre celles associées à la commutation du premier mode M1 vers le deuxième mode M2 d'une part, et celles associées à la commutation du deuxième mode M2 vers le premier mode M1 d'autre part, ceci afin d'avoir un fonctionnement en hystérésis.

Lors de l'étape suivante 110, le module de réception 42 reçoit un signal représentatif d'un signal ultrasonore réfléchi par l'obstacle 14.

En complément facultatif, cette réception 110 est de préférence effectuée via la pluralité de chaînes de réception agencées en parallèle, chacune ayant une valeur de gain respective prédéfinie, ce qui permet alors d'enregistrer simultanément ou séquentiellement les différents signaux reçus, afin d'exploiter aussi bien les échos proches que les échos lointains. Autrement dit, chaque valeur de gain prédéfinie est distincte d'une chaîne de réception à l'autre. En d'autres termes, à chaque chaîne de réception est associée une unique valeur de gain prédéfinie.

L'utilisation de la pluralité de chaînes de réception selon ce complément facultatif permet alors d'augmenter la dynamique de réception, aussi bien pour les émissions effectuées suivant le premier mode d'émission M1, que pour celles effectuées suivant le deuxième mode d'émission M2.

Chaque signal reçu par le module de réception 42 est ensuite, lors de l'étape 120, filtré par le module de filtrage 46, le module de filtrage 46 comportant au moins un filtre adapté à un décalage Doppler respectif.

En complément facultatif, ce filtrage est effectué à l'aide de plusieurs filtres adaptés $FD_1$, $FD_2$, ..., $FD_N$, agencés en parallèle les uns des autres.

Lors d'une étape suivante 130 facultative, et lorsque le module de filtrage 46 comporte plusieurs filtres adaptés $FD_1$, $FD_2$, ..., $FD_N$, le module de sélection 48 sélectionne, en fonction de la vitesse V du drone 10 en direction de l'obstacle 14, un filtre adapté $FD_i$ en particulier parmi la pluralité de filtres adaptés $FD_1$, $FD_2$, ..., $FD_N$.

Cette sélection facultative 130 permet alors d'exclure un ou des signaux reçus parasites ne correspondant pas à la vitesse V du drone 10 en direction de l'obstacle 14.

La distance D du drone 10 par rapport à l'obstacle 14 est enfin calculée, lors de l'étape suivante 140, par le module de calcul 44 et en fonction du ou des signaux filtrés issus du module de filtrage 46.

Lorsque le module de filtrage 46 comporte un unique filtre adapté $FD_1$, le module de calcul 44 reçoit un unique écho filtré, et calcule alors la distance D à partir du délai de cet écho filtré.

Lorsque le module de filtrage 46 comporte plusieurs filtres adaptés $FD_1$, $FD_2$, ..., $FD_N$, le module de calcul 44 calcule la distance D à partir des différents échos filtrés issus du module de filtrage 46, en déterminant l'écho le plus pertinent parmi les différents signaux issus du module de filtrage 46, puis en déduisant la distance D à partir du délai de cet écho le plus pertinent. Le module de calcul 44 calcule de préférence en outre la vitesse relative du drone 10 par rapport à l'obstacle 14 à partir du Doppler du filtre adapté $FD_i$ ayant fourni l'écho le plus pertinent.

En cas de sélection d'un filtre adapté parmi la pluralité de filtres adaptés $FD_1$, $FD_2$, ..., $FD_N$, le module de calcul 44 calcule la distance D à partir de l'écho filtré issu du filtre adapté sélectionné.

Ainsi, l'utilisation d'un filtrage adapté selon l'invention permet d'augmenter le rapport signal à bruit du signal reçu, de sorte que le signal filtré issu du module de filtrage 46 présente un rapport signal à bruit de valeur supérieure à celle du signal reçu en entrée du module de filtrage 46, ce qui permet finalement d'améliorer la précision et la fiabilité du calcul de la distance D. Avec le dispositif électronique de détermination 12 selon l'invention, la résolution est alors typiquement inférieure à 10 cm.

En outre, le fait d'émettre le signal ultrasonore sous forme d'une impulsion modulée en fréquence suivant le premier mode d'émission, c'est-à-dire avec compression d'impulsion, permet d'avoir une meilleure portée, c'est-à-dire d'augmenter la valeur maximale de la distance D tout en conservant une bonne résolution R, la distance D déterminée pouvant aller typiquement jusqu'à 30 m pour une résolution R de 10 cm.

La durée temporelle Tp1 de préférence importante, c'est-à-dire supérieure à 1ms comme indiqué précédemment, permet d'augmenter le rapport signal à bruit en réception, et donc d'avoir également une meilleure portée. L'homme du métier observera toutefois que plus la durée temporelle Tp1 est élevée, plus l'espacement fréquentiel entre deux filtres adaptés successifs $FD_1$, $FD_{i+1}$ doit être faible, et plus le nombre N de filtres adaptés $FD_1$, $FD_2$, ..., $FD_N$ doit être important. Le choix de la durée temporelle Tp1 résulte alors d'un compromis entre la portée souhaitée et la complexité du module de filtrage 46, cette dernière augmentant lorsque le nombre N de filtres adaptés $FD_1$, $FD_2$, ..., $FD_N$ croît.

La durée temporelle Tp2 de préférence faible, c'est-à-dire inférieure ou égale à 2 xR $\frac{2 \times R}{c}$ comme indiqué précédemment, telle qu'une durée inférieure ou égale à 1ms, permet d'avoir une bonne résolution R, sans nécessiter d'avoir plusieurs filtres adaptés $FD_1$, $FD_2$, ..., $FD_N$ agencés en parallèle. Dans ce cas, l'inverse de la durée temporelle de l'impulsion, i.e. 1/Tp2, est élevée, et la détermination de la distance D est alors moins sensible à l'effet Doppler.

En effet, le Doppler est de manière générale susceptible de perturber l'estimation de la valeur de la distance D, lorsqu'il est supérieur à l'inverse de la durée temporelle de l'impulsion, c'est-à-dire lorsqu'il est supérieur à 1/Tp où Tp est la notation générale désignant la durée temporelle de l'impulsion, quel que soit le type d'impulsion parmi une impulsion modulée en fréquence et une impulsion non modulée en fréquence. Autrement dit, plus la durée temporelle Tp de l'impulsion sera courte, moins la détermination de la distance D sera sensible au Doppler.

L'homme du métier comprendra alors que le module de commutation 50 permet en outre d'opter pour le mode d'émission parmi le premier mode d'émission M1 et le second mode d'émission M2 qui, au moment où la détermination de la distance D est effectuée, est le plus approprié pour remédier à la problématique précitée.

L'utilisation optionnelle de différentes modulations en fréquence du signal émis, suivant le premier mode d'émission M1, avec compression d'impulsion, permet en outre d'être plus robuste à d'éventuels signaux parasites, voire à d'autres drones volant à proximité du drone 10.

**Revendications**

1. Dispositif électronique (12) de détermination d'une distance (D) d'un drone (10) par rapport à un obstacle (14), le dispositif électronique de détermination (12) comprenant :

   - un module d'émission (40) configuré pour commander l'émission d'un signal ultrasonore en direction de l'obstacle (14) ;
   - un module de réception (42) configuré pour recevoir un signal représentatif d'un signal ultrasonore réfléchi par l'obstacle (14) ;
   - un module de calcul (44) configuré pour calculer la distance (D) du drone (10) par rapport à l'obstacle (14), à partir du signal reçu ;
   **caractérisé en ce qu'**il comprend en outre :

      - un module de filtrage (46) comportant au moins un filtre ($FD_1$, $FD_2$, ..., $FD_N$) adapté à un décalage Doppler respectif, chaque filtre adapté ($FD_1$, $FD_2$, ..., $FD_N$) étant configuré pour générer un signal filtré respectif en fonction d'un produit de convolution du signal ultrasonore émis, auquel le décalage Doppler respectif est appliqué, avec le signal ultrasonore reçu ;
      le module de calcul (44) étant alors configuré pour calculer la distance (D) du drone (10) par rapport à l'obstacle (14), à partir du ou des signaux filtrés issus du module de filtrage (46).

2. Dispositif électronique (12) selon la revendication 1, dans lequel le module de filtrage (46) comporte une pluralité de filtres ($FD_1$, $FD_2$, ..., $FD_N$) adaptés chacun à un décalage Doppler respectif, agencés en parallèle, le module de calcul (44) étant alors configuré pour calculer la distance (D) du drone (10) par rapport à l'obstacle (14), à partir des signaux filtrés issus du module de filtrage (46).

3. Dispositif électronique (12) selon la revendication 2, dans lequel le dispositif (12) comprend en outre un module de sélection (48) configuré pour sélectionner, en fonction d'une vitesse (V) du drone (10) en direction de l'obstacle (14), un filtre adapté ($FD_i$) parmi la pluralité de filtres adaptés ($FD_1$, $FD_2$, ..., $FD_N$), le module de calcul (44) étant alors configuré pour calculer la distance (D) du drone (10) par rapport à l'obstacle (14), à partir du signal filtré issu du filtre adapté sélectionné ($FD_i$).

4. Dispositif électronique (12) selon l'une quelconque des revendications précédentes, dans lequel le module d'émission (40) est configuré pour commander l'émission du signal ultrasonore sous forme d'au moins une impulsion modulée en fréquence, chaque impulsion modulée en fréquence ayant une durée temporelle (Tp1) de préférence supérieure ou égale à 2 ms, de préférence encore supérieure ou égale à 4 ms, et de préférence encore supérieure ou égale à 6 ms.

5. Dispositif électronique (12) selon la revendication 4, dans lequel le module d'émission (40) est configuré en outre pour commander l'émission du signal ultrasonore sous forme d'au moins une impulsion non modulée en fréquence, et

dans lequel le dispositif (12) comprend en outre un module de commutation (50) configuré pour commuter le module d'émission entre un premier mode (M1) d'émission du signal ultrasonore sous forme d'au moins une impulsion modulée en fréquence et un deuxième mode (M2) d'émission du signal ultrasonore sous forme d'au moins une impulsion non modulée en fréquence,

chaque impulsion non modulée en fréquence ayant une durée temporelle (Tp2) de préférence inférieure ou égale

à $\dfrac{2 \times R}{c}$ où R est une résolution prédéfinie en distance et c représente la vitesse du son dans l'air, telle qu'une durée inférieure ou égale à 1ms.

6. Dispositif électronique (12) selon la revendication 5, dans lequel le module de commutation (50) est configuré pour commuter le module d'émission entre le premier mode d'émission (M1) et le deuxième mode d'émission (M2), en fonction d'au moins une grandeur parmi une distance (D) entre le drone (10) et un obstacle (14) et un rapport signal sur bruit associé à la ou aux dernières réceptions de signal ultrasonore,
le nombre d'émissions suivant un mode d'émission donné parmi le premier mode d'émission (M1) et le deuxième mode d'émission (M2) étant de préférence supérieur ou égal à un nombre minimal prédéterminé, le nombre minimal prédéterminé étant de préférence supérieur ou égal à 3, de préférence encore égal à 4.

7. Dispositif électronique (12) selon l'une quelconque des revendications précédentes, dans lequel le module de réception (42) comporte plusieurs chaînes de réception agencées en parallèle, chaque chaine de réception étant configurée pour enregistrer le signal reçu avec une valeur de gain respective,
chaque valeur de gain étant de préférence distincte d'une chaine de réception à l'autre.

8. Drone (10) comprenant un dispositif électronique (12) de détermination configuré pour déterminer la distance (D) du drone (10) par rapport à un obstacle (14),
**caractérisé en ce que** le dispositif électronique de détermination (12) est selon l'une quelconque des revendications précédentes.

9. Procédé de détermination d'une distance (D) d'un drone (10) par rapport à un obstacle (14), le procédé étant mis en oeuvre par un dispositif électronique (12) et comprenant :

    - la commande de l'émission (100) d'un signal ultrasonore en direction de l'obstacle (14) ;
    - la réception (110) d'un signal représentatif d'un signal ultrasonore réfléchi par l'obstacle (14) ;
    - le calcul (140) de la distance (D) du drone (10) par rapport à l'obstacle (14), à partir du signal reçu ;
    **caractérisé en ce qu'**il comprend en outre :

    - le filtrage (120) du signal reçu avec au moins un filtre ($FD_1$, $FD_2$, ..., $FD_N$) adapté à un décalage Doppler respectif, chaque filtre adapté ($FD_1$, $FD_2$, ..., $FD_N$) générant un signal filtré respectif en fonction d'un produit de convolution du signal ultrasonore émis, auquel le décalage Doppler respectif est appliqué ;
    le calcul de la distance (D) du drone (10) par rapport à l'obstacle (14) étant alors effectué à partir du ou des signaux filtrés.

10. Programme d'ordinateur comportant des instructions logicielles qui, lorsqu'elles sont exécutées par un ordinateur, mettent en oeuvre un procédé selon la revendication précédente.

FIG.1

Doppler

46

FD$_1$

42

FD$_2$

48

FD$_N$

44

D

## FIG.2

Emission d'un signal ultrasonore en direction de l'obstacle 100

Réception d'un signal représentatif d'un signal
ultrasonore réfléchi par l'obstacle 110

Filtrage du signal reçu avec au moins un filtre adapté à
un décalage Doppler respectif 120

Sélection d'un filtre adapté en fonction d'une vitesse du drone 130

Calcul de la distance du drone par rapport à l'obstacle
en fonction du signal filtré 140

## FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2400460 A1

**Littérature non-brevet citée dans la description**

- **DE BRIOD.** *Optic-Flow Based Control of a 46g Quad-rotor*
- **DE JULIN.** *Optical Flow Based Velocity Estimation for Vision based Navigation of Aircraft*
- **DE HO.** *Distance and velocity estimation using optical flow from a monocular camera*